# EUROPEAN PATENT APPLICATION

(11) **EP 4 163 747 A1**
(43) Date of publication of application: **12.04.2023**
(21) Application number: 22199170.6
(22) Date of filing: 30.09.2022
(51) Int. Cl.: G05B 19/418

(54) **PLATFORM FOR THE AUTOMATION OF QUALITY CONTROL PROCESSES IN THE MANUFACTURING SECTOR**

(30) Priority: 07.10.2021 IT 202100025514
(71) Applicant: Innoida S.r.l., 80038 Pomigliano d'Arco (NA) (IT)
(72) Inventor: BELLUCCI, Marco, Napoli (IT); LO SARDO, Marco, San Vito al Tagliamento (PN) (IT)
(74) Representative: Bruni, Giovanni

(57) **Abstract**

The present invention finds its application in the manufacturing field. It offers an answer to the need of optimizing quality control processes, especially in production contexts characterized by a significant variety of productions, tackling the problem of defining the essential characteristics that a platform must have, including a suitably equipped physical station, both from software and hardware point of view; so that it can support various operational approaches to perform quality control on a manufacturing production, in all those cases in which quality control is conducted through a visual inspection.
A platform set up for progressive automation of quality control is therefore indicated, even in cases where this operation (i.e., the quality control) has not been planned right from the design of the product.

In summary, the teachings of the present invention enable the execution of quality control processes designed to be performed by an operator, with the difference that the operator's work, in addition to being facilitated and made particularly quick, is also exploited to produce other information, i.e., to produce a set of training data suitable for configuring the platform according to the invention to gradually replace the operator in his inspection and control activities, automating a process which, in known cases in which the present invention is not adopted, it is almost never automated.

## Description

### Technical Field of the Invention

The present invention finds its application in the manufacturing field, and addresses the need to optimize quality control processes, especially in production contexts characterized by a significant variety of productions.

The invention addresses the problem of defining, both from a software and hardware point of view, a platform including a suitably equipped physical station. The essential features of said platform, must be suitable to make it able to support various operational approaches to perform quality control on a manufacturing production, in cases where the control can be carried out through a visual check.

In particular, the indicated platform is designed for a progressive automation of quality control, even in cases where this automation has not been planned since the design of the product.

### Known Art

It should be noted that, especially in production contexts characterized by a significant variety of productions, companies normally do not make the investments necessary for the development of programs and systems that are used to perform automatically quality control.

In fact, the types of defective that should lead to discard an item can be too much diversified, and the costs to develop or update the control applications should be too frequent. Consequently, in the current practice, quality control, which today is an increasingly necessary process, so much so that it must be carried out systematically, is typically a process that is set up by providing checks, piece by piece, by a human operator and, in a large number of cases, the companies don't even consider automating it.

In order to illustrate some typical characteristics of the quality control processes, and above all the characteristics that make it difficult to be strongly automate them, reference will ideally be made to the methods for detecting aesthetic defects due to the surface processing of generic products. However, the process described can be adapted to all cases in which manufacturing defects, or production anomalies, can be found through the visual check of the product to be checked. Obviously, the quality requirements associated with this kind of processing can be very different from case to case, given that the aesthetic quality of such finishes has different importance depending on the specific product.

For example, we will take a case with fairly stringent quality requirements, that is, the case in which the goal is to identify all the pieces that have some defect, also considering the presence of relatively small defects.

As already mentioned, in the case of a company that does not have suitable tools to automatically perform the quality control (QC), the operational phases of the QC process are carried out by an operator substantially dedicated to viewing all the pieces manufactured; the operator checks them one by one, and, whenever he finds a non-conforming part, he isolates it.

At this point, two alternative ways can be adopted: in the simplest case the defective piece is simply eliminated; in other cases, more virtuous, however, the defect is recognized and cataloged for subsequent analysis, aimed at improving the production process, or at the recovery of the discarded piece by repairing the anomaly found.

For example, if the processing concerns the surface of a panel to be used for the manufacture of a piece of furniture, the defect could be a scratch or a dent (defects attributable to the handling of the object during processing), or the defect could consist in the presence of one or more stains, or in an uneven coloring (the latter defects, instead, could be attributable to the malfunctioning of some painting machinery).

In the event that the quality control provides for the cataloging of the defects found, then it is also useful to report the position and size of the defect.

Cataloging is therefore important, and useful, for the subsequent analysis of the defects found, to conceive measures to improve the production processes, and to reduce the percentages of waste.

The just reported very brief summary of the quality control process immediately highlights how difficult it is to define objective criteria when control processes of this type are put into practice. Certainly, the outcome of the checks carried out in this way does not produce very obvious errors (unless the operator is seriously negligent), however some potentially discardable pieces may fall within the discretion of the operator performing the check.

An objectivity of judgment is in any case to be counted among the objectives of any quality control process, and it can certainly be achieved more easily by resorting to QC processes performed automatically.

The QC processes performed automatically are mainly adopted in the context of very stable productions, with large volumes of pieces, that is, in cases where the investment to automate the process pays off widely.

Generally speaking, it should be noted that the automation of quality control can be set according to two different geneses.

The first genesis, is applied to those quality control processes that are conceived, right from the design and engineering phases of the product, to be carried out automatically; in this case many checks can be easily carried out automatically, typically by performing specific measurements (depending on the particular product considered) integrated into the manufacturing process itself.

In other cases, instead, the design and engineering phases of the product are not carried out paying particular attention to foreseeing the automation of quality control, and it is assumed that a significant part of the control procedures are, at least initially, performed by human operators.

In these cases, i.e., to automate a check initially thought to be performed by an operator, the approach adopted for the automation of the process follows a second genesis, which consists in making the machines do more or less what the operator essentially does. In other words, we do not think about redefining the control parameters, but we continue to base the control on the evidence that can be found by the human operator, therefore:
- since the operator must visually examine the artefact to be checked, the automatic system must include a subsystem for taking images;
- the automatic system, will then have to run a software of image recognition to detect manufacturing defects, simulating the operator's performance, and, again like the operator, will have to report the result of the examination performed in some computer report.

The choice of resorting to the second development genesis to automate a quality control process, i.e., simulating the behavior of the human operator, after all, is an obligatory choice in many cases where the control through alternative processes would require rethinking the production process, and possibly make changes to the production machinery. Furthermore, it is a choice also favored by the fact that the known technique offers the tools to automatically perform the above operations. However, there are some factors that prevent the spread (and fine-tuning) of automated processes implemented in this way, or at least make them impractical, in many cases.

If on the one hand the video shooting subsystem does not pose significant problems, and above all it can be used for a considerable variety of cases, on the other hand the development of the necessary programs for analyzing the acquired images poses several problems, and in some cases even risks not being feasible. The family of technologies that today appears to be the most suitable for conducting this kind of image analysis is based on the so-called "Deep Learning" and the use of so-called "Neural Networks".

"Neural Networks" are mathematical tools known for some time, widely studied as demonstrated by the large literature on the subject, and they are frequently used as "machine learning" tools for the automatic recognition and classification of images. Facial recognition is just one example of the many applications for which these "Neural Networks" are used.

It is also widely known that a training and subsequent validation process is required for the functioning of a "Neural Network". During the so-called training, a plurality of images of which the correct classification is already known is presented to the "Neural Network", in order to instruct, through examples, the network itself to associate the correct classification to each image.

However, it is clear that, where the task for which you want to train a "neural network" specifically requires to recognize details relating to a specific industrial component, such as, for example, production defects that can generally occur in a manufacturing context, the problem arises of having a sufficiently large number of images to train the "neural network".

In fact, in order to have a large number of different images relating to pieces produced by a specific industrial process, and in particular to have a large number of images relating to pieces with aesthetic defects or other types of nonconformities, it is necessary to have numerous pieces available already produced and, in particular, a high number of defective or non-compliant pieces. In industrial practice, this is evidently excessively expensive, both in terms of time and in terms of costs, and is one of the reasons why, in many cases, procedures are not adopted for the automatic analysis of the quality of pieces produced at industrial level.

Ultimately, the common practice that characterizes the quality control of manufacturing processes is currently stabilized on some balances in which automation is present only in a part, probably a minority, of cases. While in the remaining cases where quality must be managed, the control is carried out by a QC operator.

The automation of quality control is in fact limited to productions that are very stable in the medium term, for which it is convenient to make the necessary investments to automate a control process; better if it concerns productions in which the issue of quality control has been managed right from the design and engineering phases of the product.

This current balance can be summarized by resorting to a few observations reported below.

A first summary observation, which defines the known practice, consists in the fact that, in the case of the many manufacturing processes, in which the design is not set up from the beginning to include quality control, the quality control process must be defined apart from.

In these cases, it is typical that the machinery used to carry out the various processes does not directly carry out all the measurements that would be necessary to be sure that the final product will not have defects. In any case, if a manufacturing process must comply with quality parameters, it is essential to foresee a final control phase, in which the products are analyzed, and possibly discarded, when their processing state is very advanced: often the control takes place on finished or semifinished pieces.

A second summary observation consists in the fact that this final check, necessary to discard the pieces that would compromise compliance with the quality parameters that the manufacturing process must guarantee, is typically conducted by a human operator.

A third summary observation is that said final check takes place by visual inspection.

Based on these premises, it can be said that it is not easy to create the conditions to alter the existing balance, in the sense of increasing the number of cases in which quality control is carried out automatically.

For sure, it is unrealistic to propose replacing visual inspections performed by an operator with automatic inspections based on automatic image recognition, if this replacement must require a redesign of the quality control system for each individual job. In particular, this road is unfeasible especially for processes and artifacts whose production is subject to frequent updates.

However, an automatic quality control system can be proposed, provided that it can be used transversally on many types of production and, above all, provided that its configuration can take place through learning processes, which, in turn, can be very automatable.

In fact, only in this way, i.e., by relieving the burden of designing or specializing any control system, it is realistic to propose an increase in the automation of quality processes.

The obligatory path, therefore, is to resort to methods of artificial intelligence tools based on learning. Where the "learning" must be seen as an alternative to "programming".

Some of the authors of the present invention have developed a method which teaches how to articulate a new quality control procedure which is based on a methodological flow which, in the face of the acquisition in a digital format, of the image of a piece of which you want to analyze the presence of defects, includes some steps performed not only by a human operator, but also by a program designed to automatically analyze said image.

The peculiarity consists in the fact that the analysis of the images performed by computer (i.e., through an appropriate program), in turn, operates through a processing of the acquired image, a processing which is performed using a "neural network".

In an initial phase, the "neural network" is not trained, and therefore it is not able to produce results that correctly interpret the images, identifying the possible presence of defects. In this first phase, the operator's judgments are essential for the purposes of characterizing the present invention, and achieve the purpose of building a training sample for automatic analysis tools, such as "neural networks". The creation of such a training sample does not require the QC operator to do any additional work, and the training algorithms can be activated while the operator is at work, since each individual image produces training samples which can be used both for actual training and for the validation of the training achieved.

At the basis of the invention, as already mentioned, there is the choice of using analysis tools based on "neural networks". This tool, to automatically carry out its analyzes on the various artifacts that must be checked from time to time, does not require programming, but training.

Furthermore, the invention is based on the further intuition that, in cases where an automated control system, ready to be used, is not available, the normal work performed by a QC operator can be exploited to provide for the training of a "neural network".

For further details on this method, please refer to the patent application n. IT102021000025514, entitled "*METHOD OF AUTOMATION OF QUALITY CONTROL PROCESSES IN THE MANUFACTURING SECTOR*", contemporarily filed by some of the authors of this patent application.

It is therefore necessary to have a computerized platform for quality control in manufacturing processes, in which the control is based on visual inspection of the product, when the latter is in an advanced state of processing: this platform being suitable for supporting both the quality control performed by an operator, and an automated quality control.

To date, such a platform is not even conceivable, since the quality control conducted by an operator, or conducted automatically, are thought of as alternative processes.

### Purpose and summary of the invention

The general purpose of the present invention is to indicate a computerized platform which includes an operator station; a station that is arranged to allow an operator to carry out, by visual inspection, quality control of manufactured pieces, and allowing this operator to carry out his work comfortably and quickly.

At the same time, said computerized platform must be suitable for learning the tasks performed by the operator, so that, once these tasks have been learned, it is able to continue the work without the intervention of the operator.

An essential feature of this platform is that, every time it is used to support quality control processes on new products, or on new versions of a product, the operator can resume his or her place, until the platform also learns any new tasks. But the continuous reconfiguration and updating of the tasks that the platform must learn must not require a special commitment from the operator who carries out his control activities, nor from any other operators to be involved in configuring the platform itself. Basically, the platform must only need the normal control activity that the operator must perform in any case.

Lastly, said control platform must include arrangements which also allow it to support a mixed quality control process, in which, for example, the automatically conducted part inspects only the easiest and, hopefully, the most numerous cases, while the human operator is involved only in more particular cases, where, in addition to identifying pieces to be isolated or discarded, it is also advisable to formulate analyzes on the type of anomaly found.

In summary, the computerized control platform according to the invention must simultaneously support the visual inspection work of a human operator, but also the acquisition of digital images essential for carrying out such inspections, as well as the automatic processing of such images.

These processing allowed by said platform is, among other things, very important and effective for putting into practice also the methodological teachings indicated in the patent application n. IT102021000025514, entitled "*METHOD OF AUTOMATION OF QUALITY CONTROL PROCESSES IN THE MANUFACTURING SECTOR*", filed by some of the authors of this patent application.

The aims established for this invention are achieved by the use of a computerized platform that includes an operator station comprising a video screen suitable for displaying one or more views of an artefact to be inspected, this inspection being aimed at finding the presence, or not, of anomalies on the object, which can be found by visual inspection; and said operator station is also equipped with human-machine interaction peripherals, through which the operator is enabled to interact with the images displayed on the video screen, being said human-machine interaction peripherals suitable for selecting parts of the image and for associating labels to the selected parts.

Moreover, said computerized platform comprises a subsystem for handling and presenting the individual pieces of the inspected artefact, said handling and presentation subsystem being designed to position, one by one, said individual pieces of the inspected artefact, in front of at least one video camera suitable for acquiring at least one image of each individual piece of the inspected artefact; said at least one video camera being included in said computerized platform, and comprising memory means and calculation means arranged for:
✔ acquiring and storing the captured images,
✔ acquiring the partitions of the images selected by the operator, as well as the label assigned by the operator,
✔ eseguire un programma di elaborazione delle immagini acquisite predisposto per elaborare le stesse attraverso almeno una "rete neurale"
✔ running a program for processing the acquired images configured to process them through at least one "neural network".

Moreover, said memory means and said calculation means included in said computerized platform are configured to execute both training programs of said at least one "neural network" and programs in which at least one "neural network" is used to process the acquired images, and to produce their classification as output.

These characteristics of the computerized platform are to be considered as essential for the purposes of defining the present invention, and for achieving the purpose of offering manufacturing companies, which carry out their quality control processes involving an operator, a tool able to gradually allow to automate these tasks.

By resorting to the teachings of the present invention it is possible to provide many manufacturing companies with a platform which allows to implement the migration process towards an automated, objective and efficient quality control. And such migration process can be sustained without the need to go through onerous programming or configuration tasks whenever production of a new artifact or a new version of it is introduced.

The computer platform according to the invention allows the construction of a training sample for automatic image analysis tools belonging to the family of "neural networks", understood broadly; and the creation of such a training sample does not require the QC operator to do any additional work.

On the contrary, the interface made available by the computerized control platform, which in turn presents the operator with digital images of the piece to be inspected, if anything, facilitates the operator's task of classifying and locating the individual defects that he detects.

The training algorithms can be activated while the operator is at work, since every single image, examined by the operator, produces training samples that can be used both for actual training and for the validation of the training achieved.

This invention also has further advantages, which will become more evident from the following description, which illustrates further details of the invention itself through some embodiments and from the attached claims, which form an integral part of the present description.

### Detailed description

At the basis of the invention is the choice to use analysis tools based on "neural networks". This choice is decisive since the "neural networks" tool does not require programming, but training to automatically carry out its analyzes on the various artifacts that must be checked from time to time.

Thanks to the computerized platform according to the invention , a methodological flow is put into practice which includes the visual inspection operations performed by the operator as occurs in many cases according to current practice, however, the operations performed by the operator can be accompanied by other operations performed automatically, and the interaction between the operational flow performed by the operator and the operational flow performed automatically does not require slowing down the operations to be performed by the operator himself or adding elements of complexity in its job.

Typically, QC operators in charge of quality control inspections work in front of conveyor belts or other systems that present the objects to be inspected one after the other. Therefore, the same workstations set up for the operator who has to inspect the artefact can be equipped with a video camera that acquires the same view that is offered to the operator.

Generally, the artefacts are inspected by the operator who views them live, operating from an appropriate station; in some forms of implementation, it is also possible to adopt a solution which provides that the video image recovery is acquired with a camera integrated in a wearable device suitable to be worn by the operator himself. This choice appears less preferable, since, when the platform will have to implement inspections without an operator (because it will have "learned" the rules and classification criteria), it will be necessary to install a camera in the position where the operator was. However, the choice of using a camera wearable by the operator is a form of implementation that simplifies the handling system of the pieces to be inspected, as it is the operator himself who is involved in their handling.

This form of implementation, therefore, allows to acquire the inspection images in digital format, without complicating the handling system of the pieces to be inspected; allows to keep valid some possibly consolidated procedures, in which the operator personally handles the pieces he inspects, but postpones, to a later stage, the problem of moving the pieces to be inspected, when the computerized inspection platform becomes suitable to work autonomously, that is, without the presence of the operator.

In any case, it is clear that it is certainly possible to equip the operator station with a video camera, so that it is possible to acquire images in digital format of the views presented to the operator who is carrying out the inspections.

In other possible forms of implementation, given that the images are acquired in digital format, and that it is certainly not a problem (even in terms of costs) to acquire images with excellent resolution, it is even possible that the inspections by the operator are performed directly observing the digital image, without the need to set up a workstation that allows the operator to view the artefacts to be inspected in presence. On the contrary, this implementation option, in many cases, can be considered preferable, given that the installation of a video camera in a point of passage of the artefact is, in general, an easier and simpler operation than the preparation of an operator station in the production area.

It is clear that by positioning a video camera away from the operator station, in a point of passage of the product in one of the final stages of the production process (i.e., when the product is substantially complete), the visual inspection takes place by viewing the acquired images on video. Therefore, it is possible to set up the operator station in a normal office with a desk, where the operator works in front of a monitor: so, arranging such a station in one of the simplest imaginable ways. Furthermore, in this way the handling system of the pieces to be inspected is also drastically simplified, as it is sufficient to position cameras, i.e., very small objects, in points of the already existing assembly line, and set up for purely manufacturing functions, and by choosing locations from which significant images can be acquired for inspection purposes.

The visual inspection, both in the case in which it takes place in presence and in the case in which it is carried out by viewing the acquired images of the product on video, allows the operator to see (when present) any production anomalies. Both in the case of inspection in presence and in the case of monitor inspection, the operator must signal the result of his inspection, and, if in the absence of anomalies, the absence of signaling of the result can be conventionally accepted, considering the silence as corresponding to a positive outcome (i.e., "absence of defects"), in the event that an anomaly is detected, an outcome must always be explicitly expressed.

Having a digitized image on the monitor, the operator, even if he has carried out the inspection by viewing the artefact in presence, can use the video interface to point and circumscribe a small area of the image that exactly frames the anomaly identified.

Clearly, pointing to the video and selecting an image area is absolutely simple, for example using a "mouse", or, even more simple, if the monitor used includes a "touch screen" function.

A final task that the operator is called upon to carry out is to label the detected anomaly or defect.

The labeling of the anomalies detected is not strictly essential in cases where the defective pieces are simply rejected without any subsequent analysis on the causes that gave rise to the anomaly; however, thanks of the fact that it is a very fast operation, which the operator can carry out without a substantial additional effort, the labeling of defects occurred during the manufacturing process, and detected, is certainly a recommendable practice in every process of quality check.

In particular, given that the operator already selects the area of the image that frames the defect, if a predefined list of possible anomalies is presented, the operation of selecting the defect actually found can be carried out very quickly, without significant operational burden.

Even if the type of defect cannot be associated with a predefined and available label, the operator can associate a temporary label indicating a non-pre-classified anomaly, so as to allow a subsequent more in-depth analysis which can lead to an update of the default list of possible anomalies.

Alternatively, the operator can add a new label while online and use that (i.e., the newly added label) for labeling. This last option is certainly feasible from a technical point of view, and has the advantage of always attributing an explanatory label to each anomaly; however, it is a not-recommended option, because it slows down the operator's job, and introduces a classification that can contain elements of subjectivity, especially as it is defined quickly, and without the appropriate reflections that could be useful.

Ultimately, even with all the implementation variants mentioned above, a station like the one indicated in the previous description allows an operator to carry out a quality control in the traditional way and, at the same time, allows to acquire a rich sample of images, associated with their inspection results.

Furthermore, in the event that the inspection highlights an anomaly to be reported, other information generated by the operator can be acquired, and in particular it must be produced, in digital format too, the cropping of the image, in order to frame well the detected anomaly, and, in most cases, the detected anomaly is also classified through appropriate labelling.

At this point the computerized control platform only needs to be equipped with suitable calculation and memory means, suitable for executing specific programs to support the quality control procedures.

A first set of programs pertains to the quality control process carried out by inspection with a human operator, and is a set of programs that quite all companies are typically equipped with, in order to carry out quality control of their products. Among the functions performed by the programs belonging to this first set, there is obviously the essential function, which consists in maintaining registers on the quality of production, in order to allow the isolation of anomalous pieces, thus guaranteeing appropriate quality standards.

In addition to the programs that implement this essential function, there are usually programs for analyzing the anomalies found, as well as programs for the statistical characterization (and representation) of the checks carried out.

A second set of programs pertains to the process of progressive automation of quality control. In this set of programs, according to the preferred embodiment of the present invention, there are programs which implement the methodological teachings indicated in the patent application n. IT102021000025514, entitled *"METHOD OF AUTOMATION OF QUALITY CONTROL PROCESSES IN THE MANUFACTURING SECTOR*", filed by some of the authors of this patent application.

In general, the programs belonging to this second set constitute the innovative part of the invention, as they are programs that can be used downstream of manufacturing processes that vary with significant frequency, without requiring complex configurations or, worse, rewriting them in part. Among these programs, there are:
✔ a program that creates a training sample set including images, or cutouts of images of real pieces with their relative classification regarding the presence or absence of defects or anomalies of various types;
✔ a training program of one or more "neural networks", which by means of said training sample set, trains said one or more "neural networks" to automatically perform the analysis and classification regarding the presence or absence of defects or anomalies of various type;
✔ an automatic image analysis program which, through the use of said one or more "neural networks", carries out real-time analyzes of the images acquired by the computerized system according to the invention (it is noted that said program can operate either by resorting to " neural networks" already trained, and "neural networks" in training).

As already mentioned, several times, the platform according to the invention allows to implement efficiently the methodology according to teachings indicated in the patent application n. IT102021000025514, entitled "*METHOD OF AUTOMATION OF QUALITY CONTROL PROCESSES IN THE MANUFACTURING SECTOR*", and of which it is useful to recall some essential characteristics below, for which patent protection has been requested (and which therefore constitute the prior art of reference for the present invention).

The procedure indicated in the patent application n. IT102021000025514, uses an image analysis program that produces its own conclusions based on results provided by a "neural network" which, at least initially, has not yet been trained. The images that are analyzed by this program are the same ones that are analyzed by a QC operator who, on the basis of his knowledge, evaluates the possible presence of defects on the artifacts he is controlling.

This program operates in parallel with the operator's work, therefore, each image relating to a sample of the product to be analyzed is actually used first as a verification sample.

This is because the result of the automatic analysis of this sample, which in turn depends on the results of the "neural network" (which constitutes the decision-making engine of this program), is compared with the classifications produced by the operator. Each sample is therefore used, in fact, in the first place, as a test sample.

In a second step, given that presumably the "neural network", at least initially is not trained, and therefore the training must be continued, the various acquired samples (corresponding to the decisions of the operator who carries out the quality control) are used to enrich the training set with additional samples.

By having a training data set, in which each image, or each image cutout, is associated with a label (i.e., a label that indicates "absence of defect", or identifies a "type of defect"), the training of the "neural network" can be put into practice, and conducted using an appropriate learning algorithm, generally different from case to case, depending on the "neural network" model that is adopted.

It should be noted that the starting samples produced by the normal operation of the operator who performs the quality control are first used as test samples, and then, they are transformed into training samples for the "neural network", after being suitably formatted, typically (but not necessarily) by subdividing the image acquired in smaller images, i.e., cutouts, which represent smaller and more detailed regions (even relatively small in size) of the overall initial image.

In general, however, the subdivision of the images of the pieces to be checked into cutouts allows you to build a more homogeneous and effective training sample. In fact, the images either do not contain defects, or contain a well-framed defect in the image to be analyzed. Generally, excluding borderline cases, they are smaller and simpler images, and refer to details of the object to be checked, not to the object in its entirety. As already mentioned, some of these details, depicted in the individual cutout, are free from visible defects, other parts of the artefact, on the other hand, correspond to the areas where there is a defect, and this always occupies a significant part of a cutout of the image, therefore the defect is generally evident because the sample image (i.e., the cutout) substantially frames this defect.

Once the operator has framed the defect, the criteria for subdividing the images can be automated by following various heuristic rules, starting from the area with which the defect was originally confined by the operator through an appropriate interface which has already been said.

In some cases, where the defect is very extensive; consider the example of a long scratch on a surface that must have a homogeneous finish; this, for convenience, can be framed in a set of adjacent cutouts in which the acquired image is subdivided, and each of these cutouts can be classified with a label corresponding to the defect "scratch", or "scratch segment".

This methodological flow is suitable to be implemented through an IT platform, including an operator station and physical systems which are the object of the present invention.

Through this computerized platform, therefore, it is possible to support the activity of an operator engaged in detecting defects; and this platform, after the training phase of the "neural network" or "neural networks", which are integrated into it, can theoretically conduct the aforementioned checks autonomously, even without the need for an operator.

In many cases, an initially supervised control process can then turn into an automated process, in which the computerized control platform produces its results without interruption, passing from the mode supervised by the operator to the automated mode.

In fact, the operator is required to carry out the checks by analyzing the individual pieces distinguishing them between the good ones and those to be rejected until the automatic analysis program, which is based on the results of a "neural network", produces results that differ from those of the operator. However, as soon as the network is trained, the accuracy of the automatic outcomes increases (and this accuracy can be objectively evaluated, in the test of facts), until, at some point, the program can be made to work by itself, because it has been possible to prove that it is able to produce always correct decisions.

### Variants and concluding remarks

In summary, the teachings of the present invention make it possible to satisfy the purposes for which it was conceived because it enables the execution of quality control processes designed to be performed by an operator, with the difference that the operator's work, in addition to being facilitated and made particularly fast (but these are not the essential purposes of the invention) it is also exploited to produce other information not strictly related to pure quality control.

The exploitation of such data makes it possible to gradually develop a platform which can quickly replace the operator in his inspection and control activities, automating a process which, in known cases, in which the present invention is not adopted, is almost never automated, since the automation of quality control, to date, is in fact relegated only to cases of productions of many pieces, very stable and repetitive over the long term.

The teachings of the invention, on the other hand, allow the development of automatic analysis programs, even in production contexts which, following the known practice, are exclusively managed with controls performed by an operator, being in fact uneconomical to develop effective programs of automated analysis.

The inventive activity associated with the present invention is not to be found mainly in the physical characteristics of the indicated platform, which, all in all, can be implemented by integrating fairly obvious systems. Instead, inventive activity was certainly exercised in the proposition of the technical problem: that is, the problem of indicating a computerized platform that could be used by a QC operator in an apparently normal way (to quickly carry out visual inspections of pieces produced through a manufacturing process), but which, at the same time, and in parallel to this operational activity, was a platform designed to treasure the work of the operator so as to be able to continue independently his job.

Therefore, although the physical characteristics of the computerized control platform according to the invention are easy to define, they respond to a need of great actual interest, which afflicts the manufacturing world, always looking to increase its operational efficiency.

It should be noted that the generation of an outcome through a simulation conducted with calculation tools based on "neural networks" constitutes an extremely fast calculation process that can be performed in real time while the operator performs his visual inspections, so that the result of the automatic analysis can be compared in real time with the result of the inspections carried out by the operator.

The computational process associated with training the "neural network"(s), on the other hand, is an iterative process that can require processing times longer than the time needed for inspections, especially if you train many networks and if you do not have of particularly powerful computing capacity (which could unnecessarily increase the costs of the platform). However, the training of the "neural network"(s), while being conducted in parallel with the inspections by the operator, is a process that can also continue outside working times and produce suitably trained "neural networks" with some delay compared to the production of the training data. However, the training of the "neural network"(s), while being conducted in parallel with the inspections by the operator, is a process that can also continue outside working time and produce suitably trained "neural networks" with some delay compared to the production of the training data.

This delay, which in any case is never excessively large (the order of magnitude ranges from tens of minutes to a few hours), while on the one hand precludes real-time training, certainly does not create any problems in applying the platform for quality control, and in pursuing the purposes of the 'invention. What matters is that, as soon as it is found that a learning process has led to the definition of a "neural network" that produces results aligned with those produced by the operator, the automatic analysis program is set up, starting from a certain moment onwards, to work autonomously, without the need to involve the operator further.

The fact that the prior art does not offer satisfactory answers for automating an increasing number of quality control processes can be seen as proof that the intuition of having a computerized control platform with a dual function is evidently a non-obvious intuition.

In fact, it should be remembered that the quality control processes are one of the most important industrial processes that concern the manufacturing field, and the fact of being able to conveniently automate them constitutes a significant advantage which, at the end, improves the general quality of the manufacturing processes as a whole.

The platform taught in the present invention can be implemented in multiple forms and variations, above all due to its intrinsic propensity to integrate with other platforms and other company systems.

For example, the operator interface can be implemented in many ways but, presumably, in the preferred implementation forms, and in particular those in which the operator performs visual inspections on a monitor (typically from his office), the computerized platform according to the invention may be closely integrated into corporate systems responsible for management control in a broad sense or, in general, in systems dedicated to monitoring manufacturing processes. In this case, the implementation of the computerized platform according to the invention can conveniently share the interfaces towards the operator and towards the other corporate IT tools; for example, when it is necessary to intervene on a production line to remove a defective piece.

The point of strength of the present invention is destined to maintain its distinctive relevance for a significant time to come, as it is based on some unpublished insights which allow data produced for other reasons to be exploited in a new way. And this innovative exploitation of information produces results not known in the state of the art, which can significantly improve the production processes of manufacturing companies.

Furthermore, the described invention is not limited to producing the classic outcome of quality control processes, in fact it provides the substantial and essential information to proceed with subsequent refinements of the production processes, because it produces a rich computerized database, descriptive of the production processes.

Such data (available encoded in a computer format) could also be used to indicate on which processes, or on which production processes, to intervene to improve production, perhaps drawing on solutions adopted in other apparently different processes, or carried out in other work centers: cases, the latter, in which the transfer of skills and experience is often slowed down.

Therefore, especially in the context of these evolutionary scenarios, the invention lends itself to incorporating and supporting further development and improvement efforts, capable of improving, or increasing, the performance of the invention as described in the light of current scenarios, working for an ever-greater integration of the platform itself into other company systems and platforms.

Therefore, further developments could be made by a man skilled in the art without thereby departing from the scope of the invention as it results from the present description and from the claims attached hereto which form an integral part of the present description; or, if said developments are not included in the present description, they may be the subject of further patent applications associated with the present invention, or dependent on it.

## Claims

1. A computerized platform that includes an operator station comprising a video screen suitable for displaying one or more views of an artefact to be inspected, this inspection being aimed at finding the presence, or not, of anomalies on the object, which can be found by visual inspection;
a. and said operator station is also equipped with human-machine interaction peripherals, through which the operator is enabled to interact with the images displayed on the video screen, being said human-machine interaction peripherals suitable for selecting parts of the image and for associating labels to the selected parts;
b. moreover, said computerized platform comprises a subsystem for handling and presenting the individual pieces of the inspected artefact, said handling and presentation subsystem being designed to position, one by one, said individual pieces of the inspected artefact, in front of at least one video camera suitable for acquiring at least one image of each individual piece of the inspected artefact,
c. said at least one video camera being included in said computerized platform,
d. and said computerized platform also comprises memory means and calculation means arranged for:
i. acquiring and storing the captured images
ii. acquiring the partitions of the images selected by the operator, as well as the label assigned by the operator,
iii. running a program for processing the acquired images configured to process them through at least one "neural network"; moreover, said memory means and said calculation means included in said computerized platform are configured to execute
iv. both training programs of said at least one "neural network",
v. and programs in which at least one "neural network" is used to process the acquired images, and to produce their classification as output.

2. Computerized platform according to claim 1 in which said at least one video camera is integrated into a wearable device suitable to be worn by the operator who performs inspections from said operator station, viewing live the artefacts to be inspected.

3. Computerized platform according to claim 1 in which said at least one video camera is positioned in a passage point of the artefact in one of the final stages of the manufacturing process, away from the operator station, so that the operator performs the visual inspection by viewing on video the images acquired by said at least one video camera.

4. Computerized platform according to claim 1 in which said man-machine interaction devices, through which the operator is enabled to interact with the images displayed on the monitor, for selecting parts of the image, include a "mouse".

5. Computerized platform according to claim 1 in which said human-machine interaction peripherals, through which the operator is enabled to interact with the images displayed on the monitor, for selecting parts of the image, include a monitor with "touch screen" functionality.
